# EUROPEAN PATENT APPLICATION

(11) **EP 4 583 298 A1**
(43) Date of publication of application: **09.07.2025**
(21) Application number: 23859914.6
(22) Date of filing: 26.07.2023
(51) Int. Cl.: H01M 50/531, H01M 10/04, H01M 10/052, H01M 10/0587

(54) **CYLINDRICAL BATTERY**

(30) Priority: 31.08.2022 JP 2022137908
(71) Applicant: Panasonic Energy Co., Ltd., Osaka 570-8511 (JP)
(72) Inventor: MATSUSHITA Kazuki, Kadoma-shi, Osaka 571-0057 (JP); GAMANO Yusuke, Kadoma-shi, Osaka 571-0057 (JP); MORI Shinya, Kadoma-shi, Osaka 571-0057 (JP)
(74) Representative: Eisenführ Speiser
(86) International application number: PCT/JP2023/027314
(87) International publication number: WO 2024/048145

(57) **Abstract**

According to the present invention, a positive electrode (11) includes, between the winding start side end (42a) of a positive electrode mixture layer (42) and the winding end side end (42b) of the positive electrode mixture layer (42) in an α-direction, a first positive electrode core exposed portion (45) which is positioned at one edge in a β-direction and to which a positive electrode lead (20) is connected, and a second positive electrode core exposed portion (46) which is positioned at the other edge in the β-direction and at least part of which is opposite the first positive electrode core exposed portion (45) in the β-direction with a part (42c) of the positive electrode mixture layer (42) therebetween. The part (42c) of the positive electrode mixture layer (42) is disposed between the first positive electrode core exposed portion (45) and the second positive electrode core exposed portion (46) in the β-direction. The width-direction length a between the first positive electrode core exposed portion (45) and the second positive electrode core exposed portion (46) is not less than 10% of the β-direction length b of the positive electrode (11).

## Description

### TECHNICAL FIELD

The present disclosure relates to a cylindrical battery.

### BACKGROUND ART

There is conventionally a cylindrical battery as disclosed in Patent Literature 1. The cylindrical battery, which has a long strip-shaped positive electrode core including a region where a positive electrode active material is provided, has a core exposed portion, in which the positive electrode core is exposed, only in one end portion in a width direction of a longitudinal intermediate part of the region, the core exposed portion being connected to a positive electrode lead.

### CITATION LIST

### PATENT LITERATURE

PATENT LITERATURE 1: Japanese Unexamined Patent Application Publication No. 2003-68271

### SUMMARY

In the above cylindrical battery, which has a positive electrode including the region where the positive electrode active material is provided, the core exposed portion is provided only in one end portion in the width direction of the longitudinal intermediate part of the region. Accordingly, the strength in one side is different from the strength in the other side in the width direction of the intermediate part. Therefore, during charge and discharge of the cylindrical battery, expansion and contraction occurring in an electrode assembly may become uneven in an axial direction, resulting in deterioration of battery characteristics.

Accordingly, an object of the present disclosure is to provide a cylindrical battery that hardly causes deterioration in battery characteristic by restraining uneven expansion and contraction of an electrode assembly in an axial direction during charge and discharge.

In order to accomplish the above object, a cylindrical battery according to the present disclosure comprises an electrode assembly formed by winding a long strip-shaped positive electrode and a long strip-shaped negative electrode through a separator, the positive electrode having a positive electrode core and a positive electrode mixture layer, the negative electrode having a negative electrode core and a negative electrode mixture layer; in which when one of both end portions of the positive electrode in a width direction is defined as a first end portion and another end portion of both the end portions is defined as a second end portion, the positive electrode has, between a winding start side end of the positive electrode mixture layer and a winding terminal side end of the positive electrode mixture layer in a longitudinal direction, a first positive electrode core exposed portion in which the positive electrode core is exposed and a second positive electrode core exposed portion in which the positive electrode core is exposed, the first positive electrode core exposed portion being positioned at the first end portion and connected to a positive electrode lead, the second positive electrode core exposed portion being positioned at the second end portion, part of the positive electrode mixture layer is arranged between the first positive electrode core exposed portion and the second positive electrode core exposed portion in the width direction of the positive electrode, and a length between the first positive electrode core exposed portion and the second positive electrode core exposed portion in the width direction is greater than or equal to 10% of a length of the positive electrode in the width direction.

According to the cylindrical battery in the present disclosure, uneven expansion and contraction of the electrode assembly in the axial direction during charge and discharge is restrained, and the battery characteristics hardly deteriorate.

### BRIEF DESCRIPTION OF DRAWING

FIG. 1 is an axial sectional view of a cylindrical battery according to an embodiment of the present disclosure.
FIG. 2 is a perspective view of an electrode assembly of the cylindrical battery.
FIG. 3(a) is a plan view of a winding inner surface of a positive electrode developed into a long strip shape, FIG. 3(b) is a plan view of a winding outer surface of the positive electrode developed into the long strip shape, FIG. 3(c) is a plan view of a winding inner surface of a negative electrode developed into the long strip shape, and FIG. 3(d) is a plan view of a winding outer surface of the negative electrode developed into the long strip shape.
FIG. 4 is a schematic plan view showing part of the electrode assembly as viewed from an axial one side.

### DESCRIPTION OF EMBODIMENTS

Hereinafter, an embodiment of a cylindrical battery according to the present disclosure will be described in detail with reference to the drawings. It is assumed from the beginning that a new embodiment is constructed by appropriately combining characteristic portions of the embodiment or modifications as will be described below. In the following embodiment, like components are designated by like reference signs in the drawings to omit redundant explanation. The plurality of drawings are schematic views, and throughout the different drawings, dimensional ratios, such as length, width, and height of each member, do not necessarily match. In this specification, the side of a sealing assembly 17 in an axial direction of a cylindrical battery 10 is defined as "top", and the side of a bottom 68 of an outer can 16 in the axial direction is defined as "bottom".

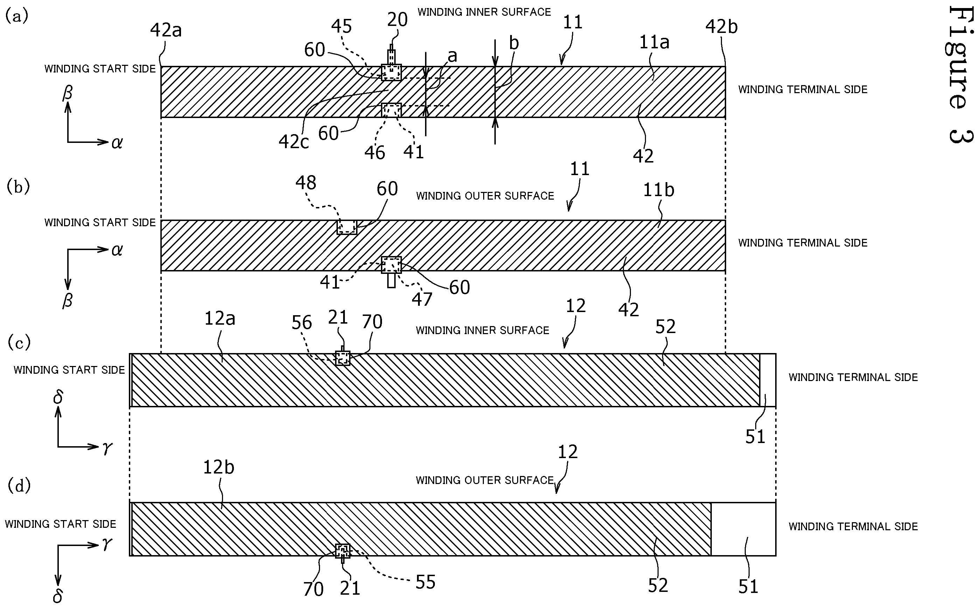

In the plan view of electrodes (positive electrode and negative electrode) in FIGS. 3(a) to 3(d) below, regions shown by slanted lines represent mixture layer forming regions. In the following description, the technical ideas of the present disclosure are described by taking as an example the case where the cylindrical battery is a lithium-ion secondary battery. However, the cylindrical battery of the present disclosure is not limited to the lithium-ion secondary battery and may be a cylindrical battery other than the lithium-ion secondary battery. Moreover, among the components described below, those not included in an independent claim representing the highest-level concept are optional components and are not essential components.

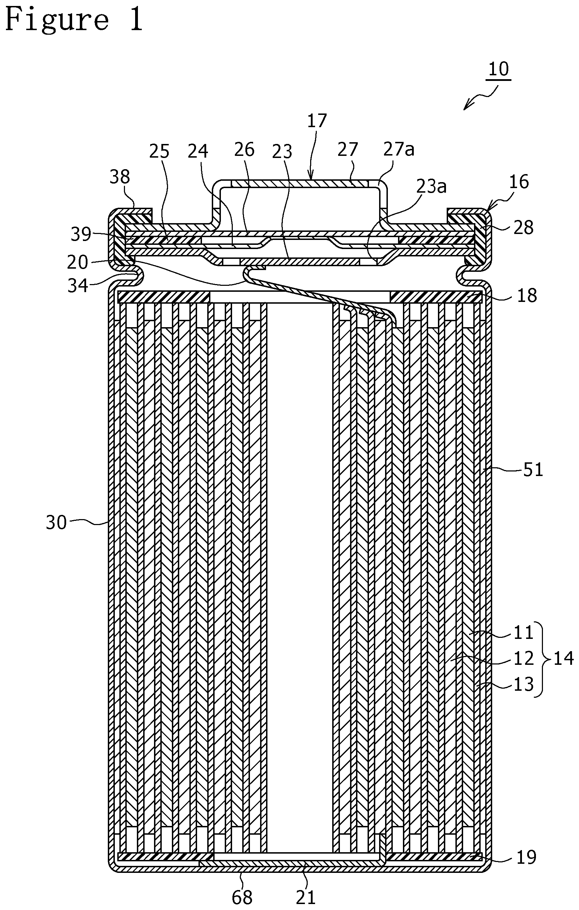

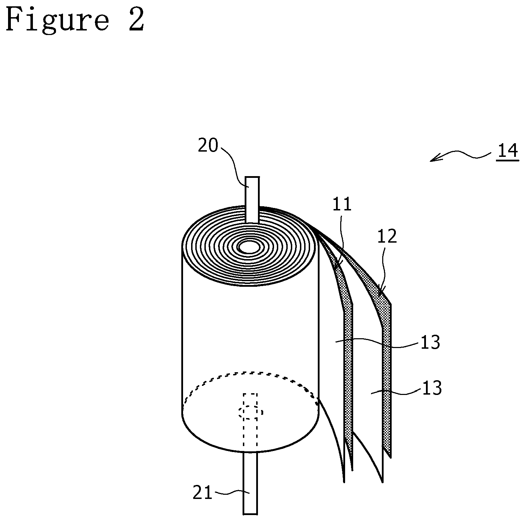

FIG. 1 is an axial sectional view of the cylindrical battery 10 according to an embodiment of the present disclosure, and FIG. 2 is a perspective view of an electrode assembly 14 of the cylindrical battery 10. As shown in FIG. 1, the cylindrical battery (hereinafter simply referred to as the battery) 10 comprises a winding type electrode assembly 14, a non-aqueous electrolyte (not shown), a bottomed cylindrical metallic outer can 16 that houses the electrode assembly 14 and the non-aqueous electrolyte, and the sealing assembly 17 that seals an opening portion of the outer can 16. As shown in FIG. 2, the electrode assembly 14 has a winding structure formed by winding a long strip-shaped positive electrode 11 and a long strip-shaped negative electrode 12 through two long strip-shaped separators 13.

In order to prevent deposition of lithium, the negative electrode 12 is formed with a dimension that is larger than the positive electrode 11. Specifically, the negative electrode 12 is formed to be longer in a longitudinal direction and a width direction (short direction) than the positive electrode 11. The two separators 13 are also formed with dimensions that are at least larger than the positive electrode 11, and are arranged to hold the positive electrode 11 therebetween. The negative electrode 12 may constitute a winding start end of the electrode assembly 14. However, the separators 13 typically extend beyond the winding start side end of the negative electrode 12, and the winding start side ends of the separators 13 constitute the winding start end of the electrode assembly 14.

The non-aqueous electrolyte contains non-aqueous solvent and electrolyte salt solved in the non-aqueous solvent. As the non-aqueous solvent, there may be used esters, ethers, nitriles, amides, and a mixture of two or more of the group consisting of esters, ethers, nitriles, and amides. The non-aqueous solvent may contain halogen substitutions that replace at least some of hydrogen atoms in these solvents with halogen atoms such as fluorine. Note that the non-aqueous electrolyte is not limited to liquid electrolyte, and may be solid electrolyte using gel like polymers or the like. As the electrolyte salt, lithium salt such as LiPF₆ is used.

The positive electrode 11 has a positive electrode core 41 and a positive electrode mixture layer 42 formed on both surfaces of the positive electrode core 41 (see FIGS. 3(a) and 3(b)). As the positive electrode core 41, there may be used a metal foil that is stable in a potential range of the positive electrode 11, such as aluminum and aluminum alloy, a film with the metal arranged on its surface layer, or the like. The positive electrode mixture layer 42 contains a positive electrode active material, a conductive agent, and a binding agent. The positive electrode 11 can be fabricated by, for example, coating the positive electrode core 41 with positive electrode mixture slurry containing a positive electrode active material, a conductive agent, a binding agent, or the like, drying the coating, and then compressing the coating to form a positive electrode mixture layer 42 on both the surfaces of the positive electrode core 41.

The positive electrode active material is constituted with lithium-containing metal composite oxides as a main component. Examples of metal elements contained in the lithium-containing metal composite oxides may include Ni, Co, Mn, Al, B, Mg, Ti, V, Cr, Fe, Cu, Zn, Ga, Sr, Zr, Nb, In, Sn, Ta, and W. Preferable examples of the lithium-containing metal composite oxides are composite oxides containing at least one of the group consisting of Ni, Co, Mn, and Al.

Examples of the conductive agent contained in the positive electrode mixture layer 42 may include carbon materials such as carbon black, acetylene black, ketjen black, graphite, and carbon nanotube. Examples of the binding agent contained in the positive electrode mixture layer 42 may include fluororesin such as polytetrafluoroethylene (PTFE), and polyvinylidene difluoride (PVdF), polyacrylonitrile (PAN), polyimide resin, acrylic resin, and polyolefin resin. These resins may be used in combination with cellulose derivatives such as carboxymethylcellulose (CMC) or its salts, polyethylene oxide (PEO), or the like.

The negative electrode 12 has a negative electrode core 51 and a negative electrode mixture layer 52 formed on both surfaces of the negative electrode core 51 (see FIGS. 3(c) and 3(d)). As the negative electrode core 51, there may be used a metal foil that is stable in a potential range of the negative electrode 12, such as copper and copper alloy, a film with the metal arranged on its surface layer, or the like. The negative electrode mixture layer 52 contains a negative electrode active material and a binding agent. The negative electrode 12 can be fabricated by, for example, coating the negative electrode core 51 with negative electrode mixture slurry containing a negative electrode active material, a binding agent, or the like, drying the coating, and then compressing the coating to form a negative electrode mixture layer 52 on both the surfaces of the negative electrode core 51.

As the negative electrode active material, a carbon material that reversibly absorbs and releases lithium ions is typically used. Preferable carbon materials include natural graphite such as flake graphite, massive graphite, and earthy graphite, and artificial graphite such as massive artificial graphite, and graphitized mesophase carbon microbeads. As negative electrode active material, the negative electrode mixture layer 52 may contain silicon (Si) materials containing Si. As the negative electrode active material, there may be used metal, other than Si, that alloys with lithium, or alloy containing the metal, and compounds containing the metal.

As the binding agent contained in the negative electrode mixture layer 52, there may be used, as in the case of the positive electrode 11, fluororesin, PAN, polyimide resin, acrylic resin, polyolefin resin, or the like, though styrene-butadiene rubber (SBR) or its modification product is preferably used. For example, the negative electrode mixture layer 52 may contain, in addition to SBR or the like, CMC or its salt, polyacrylic acid (PAA) or its salt, polyvinyl alcohol, or the like.

As the separators 13, a porous sheet with ion permeability and insulation properties is used. Specific examples of the porous sheet may include microporous thin films, woven fabrics, and non-woven fabrics. Preferable materials of the separators 13 include polyolefin resin such as polyethylene and polypropylene, and cellulose. The separators 13 may have one of a single-layer structure and a multilayer structure. On the surface of the separators 13, a heat-resistant layer or the like may be formed.

As shown in FIG. 1, the positive electrode lead 20 is joined to the positive electrode 11, and the negative electrode lead 21 is joined to the negative electrode 12. The battery 10 has an insulating plate 18 above the electrode assembly 14 and an insulating plate 19 below the electrode assembly 14. The positive electrode lead 20 extends toward the sealing assembly 17 through a through-hole of the insulating plate 18, and the negative electrode lead 21 extends toward the bottom 68 of the outer can 16 through a through-hole of the insulating plate 19. The positive electrode lead 20 is connected to the lower surface of a sealing plate 23 of the sealing assembly 17 by welding or other processing. A terminal cap 27, which constitutes a top plate of the sealing assembly 17, is electrically connected to the sealing plate 23, so that the terminal cap 27 serves as a positive electrode terminal. The negative electrode lead 21 is connected to an inner surface of the bottom 68 of the metallic outer can 16 by welding or other processing, so that the outer can 16 serves as a negative electrode terminal.

The positive electrode lead 20 is electrically connected to the intermediate part such as a central part of the positive electrode core 41 in a winding direction. As shown in FIG. 1, the negative electrode lead 21 is electrically connected to an intermediate part such as a central part of the negative electrode core 51 in the winding direction, and an outermost circumference of the electrode assembly 14 is constituted of the negative electrode core 51, so that the negative electrode core 51 on the outermost circumference is brought into contact with an inner surface of the outer can 16. In this way, both the center part and the winding terminal side-end portion of the negative electrode 12 in the longitudinal direction are electrically connected to the negative electrode terminal, so that the current collecting path through which current flows is shortened and the internal resistance of the battery 10 is reduced. However, the outermost circumferential surface of the electrode assembly in the winding direction may be constituted of a separator, and the winding terminal side-end portion of the negative electrode 12 may not be electrically connected to the negative electrode terminal.

The battery 10 further comprises a resin gasket 28 arranged between the outer can 16 and the sealing assembly 17. The sealing assembly 17 is fixed to an opening portion of the outer can 16 via the gasket 28 by crimping. As a result, internal space of the battery 10 is sealed. The gasket 28 is held between the outer can 16 and the sealing assembly 17 to insulate the sealing assembly 17 against the outer can 16. The gasket 28 functions as a sealing material to maintain the inside of the battery airtight and also functions as an insulating material to insulate between the outer can 16 and sealing assembly 17.

The outer can 16, which houses the electrode assembly 14 and the non-aqueous electrolyte, has a shoulder portion 38, a grooved portion 34, a cylindrical portion 30, and the bottom 68. The grooved portion 34 can be formed by, for example, recessing part of a side surface of the outer can 16 radially inward in a circular shape by a spinning process performed in a radially inward direction. The shoulder portion 38 is formed by bending an upper end portion of the outer can 16 inward toward a circumferential edge portion 39 of the sealing assembly 17, when the sealing assembly 17 is fixed to the outer can 16 by crimping.

The sealing assembly 17 has a structure formed by stacking the sealing plate 23, a lower vent member 24, an insulating member 25, an upper vent member 26, and the terminal cap 27 in this order from the side of the electrode assembly 14. Each member constituting the sealing assembly 17 has, for example, a disc shape or a ring shape, and each member except the insulating member 25 is electrically connected to each other. The sealing plate 23 has at least one through-hole 23a. The lower vent member 24 and the upper vent member 26 are connected at their center parts with the insulating member 25 being interposed between their respective circumferential edge portions.

When the battery 10 generates abnormal heat and has an increase in internal pressure, the lower vent member 24 deforms so as to push the upper vent member 26 toward the terminal cap 27 and breaks, resulting in interrupting a current path between the lower vent member 24 and the upper vent member 26. As the internal pressure further increases, the upper vent member 26 breaks, so that gas is discharged through the through-hole 27a of the terminal cap 27. Since the gas is discharged, excessive increase in internal pressure of the battery 10 and resultant busting of the battery 10 can be prevented, so that the safety of the battery 10 can be enhanced.

FIG. 3(a) is a plan view of a winding inner surface 11a of the positive electrode 11 developed into a long strip shape, and FIG. 3(b) is a plan view of a winding outer surface 11b of the positive electrode 11 developed into the long strip shape. FIG. 3(c) is a plan view of a winding inner surface 12a of the negative electrode 12 developed into the long strip shape, and FIG. 3(d) is a plan view of a winding outer surface 12b of the negative electrode 12 developed into the long strip shape.

The winding inner surface 11a in the positive electrode 11 is an example of the first surface of the positive electrode 11, and the winding outer surface 11b in the positive electrode 11 is an example of the second surface of the positive electrode 11. In FIGS. 3(a) and 3(b), a direction α indicates the longitudinal direction of the positive electrode 11 when the positive electrode 11 is developed into a long strip shape, and a direction β indicates the width direction of the positive electrode 11 when the positive electrode 11 is developed into the long strip shape. In FIGS. 3(c) and 3(d), a direction γ indicates the longitudinal direction of the negative electrode 12 when the negative electrode 12 is developed into the long strip shape, and a direction δ indicates the width direction of the negative electrode 12 when the negative electrode 12 is developed into the long strip shape.

As shown in FIGS. 3(a) and 3(b), the positive electrode 11 has the positive electrode core 41 and the positive electrode mixture layer 42 arranged on the positive electrode core 41. As shown in FIG. 3(a), the winding inner surface 11a of the positive electrode 11 has a first positive electrode core exposed portion 45 and a second positive electrode core exposed portion 46 in the intermediate part in the direction α within a formation region of the positive electrode mixture layer 42. More specifically, the winding inner surface 11a of the positive electrode 11 has the first positive electrode core exposed portion 45 and the second positive electrode core exposed portion 46 between a start end 42a on the winding start side of the positive electrode mixture layer 42 and a terminal end 42b on the winding terminal side of the positive electrode mixture layer 42 in the direction α.

The first positive electrode core exposed portion 45 is a portion where the positive electrode core 41 is exposed, the portion being positioned at a first end portion that is one side end portion (coinciding with the axially upper end portion) in the direction β. The first positive electrode core exposed portion 45 is connected to the positive electrode lead 20. The first positive electrode core exposed portion 45 is preferably provided between the position corresponding to 40% to the position corresponding to 60% of the length in the direction α from the start end 42a of the positive electrode mixture layer 42 to the terminal end 42b of the positive electrode mixture layer 42 with respect to the direction α, so that the current collecting path can be shortened and the internal resistance of the battery 10 can be reduced.

The second positive electrode core exposed portion 46 is a portion in which the positive electrode core 41 is exposed, the portion being positioned at a second end portion that is the other end portion (coinciding with the axially lower end portion) in the direction β. At least part of the second positive electrode core exposed portion 46 faces the first positive electrode core exposed portion 45 through the positive electrode mixture layer 42 in the direction β. In other words, a part 42c of the positive electrode mixture layer 42 is arranged between the first positive electrode core exposed portion 45 and the second positive electrode core exposed portion 46 in the direction β. A length "a" (the length in the width direction of the part 42c) between the first positive electrode core exposed portion 45 and the second positive electrode core exposed portion 46 in the direction β is greater than or equal to 10% of a length "b" of the positive electrode 11 in the direction β. As shown in FIG. 3(b), a third positive electrode core exposed portion 47 in which the positive electrode core 41 is exposed is provided at the position on the winding outer surface 11b of the positive electrode 11, the position being overlapped with the first positive electrode core exposed portion 45 in the thickness direction of the positive electrode 11. The third positive electrode core exposed portion 47 is provided only in the first end portion in the direction β as in the case of the first positive electrode core exposed portion 45.

As shown in FIGS. 3(c) and 3(d), the negative electrode 12 has the negative electrode core 51 and the negative electrode mixture layer 52 arranged on the negative electrode core 51. As shown in FIG. 3(d), the negative electrode 12 has a first negative electrode core exposed portion 55 in which the negative electrode core 51 is exposed and which is connected to the negative electrode lead 21, the first negative electrode core exposed portion 55 being provided at the position facing the second positive electrode core exposed portion 46 (radially facing the electrode assembly 14) through the separator 13. As shown in FIG. 3(c), a second negative electrode core exposed portion 56 in which the negative electrode core 51 is exposed is provided at the position overlapped with the first negative electrode core exposed portion 55 in the thickness direction of the negative electrode 12. The first negative electrode core exposed portion 55 and the second negative electrode core exposed portion 56 are preferably provided only in one end portion (axially lower end portions) in the direction δ. As shown in FIG. 3(b), a fourth positive electrode core exposed portion 48 in which the positive electrode core 41 is exposed is provided at the position on the winding outer surface 11b of the positive electrode 11, the position facing the second negative electrode core exposed portion 56 through the separator 13. As shown in FIGS. 3(a) to 3(d), in order to prevent short circuits, an insulating tape 60 is attached onto the positive electrode core exposed portions 45, 46, 47 and 48, and an insulating tape 70 is attached onto the negative electrode core exposed portions 55 and 56.

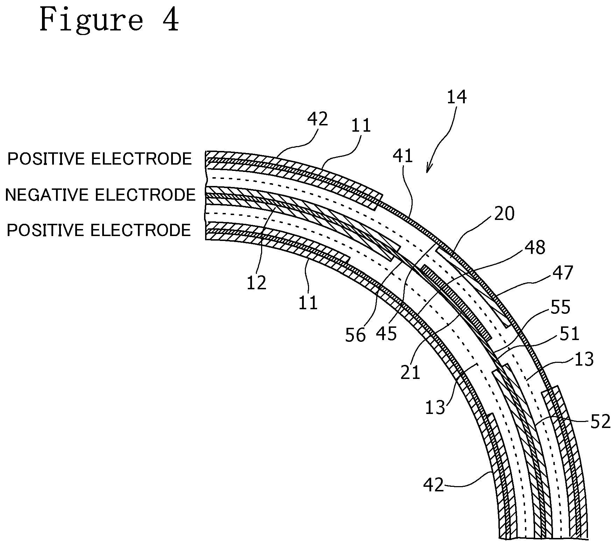

FIG. 4 is a schematic plan view showing part of the electrode assembly 14 as viewed from an axial one side and also showing the positional relationship between the positive electrode lead 20 and the negative electrode lead 21 in the winding direction of the electrode assembly 14. In the plan view shown in FIG. 4, at least part of the positive electrode lead 20 faces the negative electrode lead 21 with only the separator 13 interposed therebetween. However, the positive electrode lead 20 and the negative electrode lead 21, which are spaced in the axial direction of the electrode assembly 14 that is the direction perpendicular to the page of FIG. 4, do not overlap in the radial direction of the electrode assembly 14.

According to the present disclosure, the second positive electrode core exposed portion 46 is provided so that at least part of the second positive electrode core exposed portion 46 faces the first positive electrode core exposed portion 45 across the positive electrode mixture layer 42 in the direction β on the winding inner surface 11a of the positive electrode 11, the first positive electrode core exposed portion 45 being connected to the positive electrode lead 20. Therefore, since the strength on the one side and the strength on the other side in the direction β in the winding inner surface 11a of the positive electrode 11 can be made equal, uneven expansion and contraction of the electrode assembly 14 in the β direction (axial direction) during charge and discharge is restrained, and good battery characteristics can be achieved.

Moreover, since the length "a" between the first positive electrode core exposed portion 45 and the second positive electrode core exposed portion 46 in the direction β is greater than or equal to 10% of the length "b" of the positive electrode 11 in the direction β, it can be avoided that in a portion where the positive electrode mixture layer 42 is formed in the direction α of the positive electrode 11, a strength of a portion where the first positive electrode core exposed portion 45 is present becomes excessively lower than the strength of other portions. Therefore, dispersion in expansion and contraction of the electrode assembly 14 in the winding direction of the electrode assembly 14 during charge and discharge can be restrained and the battery characteristics can be enhanced more. Moreover, since the length of the part 42c of the positive electrode mixture layer 42, which is arranged between the first positive electrode core exposed portion 45 and the second positive electrode core exposed portion 46 in the direction β, is greater than or equal to 10% of the length "b" of the positive electrode 11 in the direction β, the capacity of the battery 10 can also be enlarged.

The third positive electrode core exposed portion 47 is provided at a position on the winding outer surface 11b of the positive electrode 11, the position facing the first positive electrode core exposed portion 45 in the thickness direction. This allows easy connection of the positive electrode lead 20.

The positive electrode 11 has the second positive electrode core exposed portion 46 at the position facing the first negative electrode core exposed portion 55 that is connected to the negative electrode lead 21 through the separator 13. The positive electrode 11 further has the fourth positive electrode core exposed portion 48 at the position facing the second negative electrode core exposed portion 56 through the separator 13. This prevents deposition of lithium at the negative electrode core exposed portions 55 and 56.

Note that the area of the second positive electrode core exposed portion 46 is preferably greater than or equal to 1.0 times and less than or equal to 1.4 times the area of the first positive electrode core exposed portion 45, because this makes it possible to approximate a width directional strength on the winding inner surface 11a of the positive electrode 11 to be symmetric with respect to the width directional center, and the area of the second positive electrode core exposed portion 46 is more preferably greater than or equal to 1.1 times and less than or equal to 1.3 times the area of the first positive electrode core exposed portion 45.

The length of the first positive electrode core exposed portion 45 in the width direction (length in the direction β) is preferably equal to the length of the second positive electrode core exposed portion 46 in the width direction. For example, the length of the second positive electrode core exposed portion 46 in the width direction is preferably greater than or equal to 0.8 times and less than or equal to 1.2 times and is more preferably greater than or equal to 0.9 times and less than or equal to 1.1 times the length of the first positive electrode core exposed portion 45 in the width direction.

The length of the second positive electrode core exposed portion 46 in the longitudinal direction (length in the direction α) is preferably longer than the length of the first positive electrode core exposed portion 45 in the longitudinal direction, and the entire first positive electrode core exposed portion 45 preferably faces the second positive electrode core exposed portion 46 in the width direction (direction β). In addition, the longitudinal position (position in the direction α) of a longitudinal center of the second positive electrode core exposed portion 46 preferably coincides with the longitudinal position of the longitudinal center of the first positive electrode core exposed portion 45.

Note that the present disclosure is not limited to the embodiment disclosed and modifications thereof, and various modifications and changes are possible without departing from the scope of the claims of the present invention and any equivalents thereof.

For example, in the above embodiment, the case where the first surface is the winding inner surface 11a of the positive electrode 11 and the positive electrode lead 20 is connected to the winding inner surface 11a of the positive electrode 11 has been described. However, the first surface may be the winding outer surface of the positive electrode, and the positive electrode lead may be connected to the winding outer surface of the positive electrode. Description has also been given of the case where the negative electrode lead 21 is connected to the winding outer surface 12b of the negative electrode 12, though the negative electrode lead may be connected to the winding inner surface of the negative electrode.

Description has also been given of the case where the third positive electrode core exposed portion 47 is provided at a position on the winding outer surface 11b that is the second surface of the positive electrode, the position facing the second positive electrode core exposed portion 46 in the thickness direction of the positive electrode 11. However, the third positive electrode core exposed portion may not be provided at a position on the second surface of the positive electrode, the position facing in the thickness direction (thickness direction of the positive electrode) the second positive electrode core exposed portion provided on the first surface of the positive electrode.

Description has also been given of the case where the negative electrode 12 has the first negative electrode core exposed portion 55 which is connected to the negative electrode lead 21, the first negative electrode core exposed portion 55 being provided at the position facing the second positive electrode core exposed portion 46 through the separator 13 (the position radially facing the electrode assembly 14). However, the negative electrode may not have the negative electrode core exposed portion at the position facing the second positive electrode core exposed portion.

### REFERENCE SIGNS LIST

10 Cylindrical battery, 11 Positive electrode, 11a Winding inner surface (first surface) of positive electrode, 11b Winding outer surface (second surface) of positive electrode, 12 Negative electrode, 12a Winding inner surface of negative electrode, 12b Winding outer surface of negative electrode, 13 Separator, 14 Electrode assembly, 16 Outer can, 17 Sealing assembly, 18, 19 Insulating plate, 20 Positive electrode lead, 21 Negative electrode lead, 23 Sealing plate, 23a Through-hole, 24 Lower vent member, 25 Insulating member, 26 Upper vent member, 27 Terminal cap, 27a Through-hole, 28 Gasket, 30 Cylindrical portion, 34 Grooved portion, 38 Shoulder portion, 39 Circumferential edge portion, 41 Positive electrode core, 42 Positive electrode mixture layer, 42a Winding start side end of positive electrode mixture layer in positive electrode longitudinal direction, 42b Winding terminal side end of positive electrode mixture layer in positive electrode longitudinal direction, 42c Part of positive electrode mixture layer arranged between first positive electrode core exposed portion and second positive electrode core exposed portion in positive electrode width direction, 45 First positive electrode core exposed portion, 46 Second positive electrode core exposed portion, 47 Third positive electrode core exposed portions, 48 Fourth positive electrode core exposed portions, 51 Negative electrode core, 52 Negative electrode mixture layer, 55 First negative electrode core exposed portion, 56 Second negative electrode core exposed portion, 60, 70 Insulating tape, 68 Bottom.

## Claims

1. A cylindrical battery, comprising
an electrode assembly formed by winding a long strip-shaped positive electrode and a long strip-shaped negative electrode through a separator, the positive electrode having a positive electrode core and a positive electrode mixture layer, the negative electrode having a negative electrode core and a negative electrode mixture layer, wherein
when one of both end portions of the positive electrode in a width direction is defined as a first end portion and another end portion of both the end portions is defined as a second end portion, the positive electrode has, between a winding start side end of the positive electrode mixture layer and a winding terminal side end of the positive electrode mixture layer on a first surface of the positive electrode in a longitudinal direction, a first positive electrode core exposed portion in which the positive electrode core is exposed and a second positive electrode core exposed portion in which the positive electrode core is exposed, the first positive electrode core exposed portion being positioned at the first end portion and connected to a positive electrode lead, the second positive electrode core exposed portion being positioned at the second end portion,
part of the positive electrode mixture layer is arranged between the first positive electrode core exposed portion and the second positive electrode core exposed portion in the width direction, and
a length between the first positive electrode core exposed portion and the second positive electrode core exposed portion in the width direction is greater than or equal to 10% of a length of the positive electrode in the width direction.

2. The cylindrical battery according to claim 1, wherein
a third positive electrode core exposed portion in which the positive electrode core is exposed is provided at a position overlapped with the first positive electrode core exposed portion in a thickness direction of the positive electrode on a second surface that is opposite to the first surface of the positive electrode.

3. The cylindrical battery according to claim 2, wherein
the negative electrode has a first negative electrode core exposed portion in which the negative electrode core is exposed and a second negative electrode core exposed portion in which the negative electrode core is exposed, the first negative electrode core exposed portion being provided at a position facing the second positive electrode core exposed portion through the separator, the second negative electrode core exposed portion being provided at a position overlapped with the first negative electrode core exposed portion in a thickness direction of the negative electrode,
one of the first negative electrode core exposed portion and the second negative electrode core exposed portion is connected to a negative electrode lead, and
a fourth positive electrode core exposed portion in which the positive electrode core is exposed is provided at a position facing the second negative electrode core exposed portion through the separator on the second surface.

4. The cylindrical battery according to claim 3, wherein
the first negative electrode core exposed portion is connected to the negative electrode lead.
